# EUROPÄISCHE PATENTSCHRIFT

(11) **EP 2 921 710 B1**
(45) Veröffentlichungstag und Bekanntmachung des Hinweises auf die Patenterteilung: **27.12.2017**
(21) Anmeldenummer: 14160600.4
(22) Anmeldetag: 18.03.2014
(51) Int. Cl.: F04D 29/12, F16J 15/16, F16J 15/3296, F16J 15/40, F04D 13/08, F04D 3/00, F04D 29/52, G01F 23/02, F01D 9/06

(54) **Strömungsmaschine mit Dichtungseinheit sowie zugehörige Wartungsverfahren**
Continuous flow machine with sealing device and associated maintenance procedures
Turbomachine avec dispositif d'étanchéité et procédures de maintenance associées

(43) Veröffentlichungstag der Anmeldung: 23.09.2015
(73) Patentinhaber: Grundfos Holding A/S, 8850 Bjerringbro (DK)
(72) Erfinder: Jessen, Allan, 7160 Tørring (DK)
(74) Vertreter: Patentanwälte Vollmann & Hemmer

(56) Entgegenhaltungen:
- WO-A1-02/088553
- CN-U- 201 697 687
- CN-U- 202 329 739
- CN-U- 202 468 428
- FR-A- 1 380 777
- GB-A- 533 623
- GB-A- 536 639
- US-A- 3 957 403

## Beschreibung

Die Erfindung betrifft eine Strömungsmaschine, insbesondere eine stehend betriebene Axialpumpe, mit den im Oberbegriff des Anspruchs 1 angegebenen Merkmalen. Aus der CN 202468428 U ist eine solche Strömungsmaschine bekannt. Strömungsmaschinen der vorstehend bezeichneten Gattung zählen zum Stand der Technik. Die vorliegende Erfindung geht von einem Stand der Technik aus, wie er durch die von der Anmelderin unter der Typenbezeichnung Grundfos KPL und Grundfos KWM vertriebenen Axialpumpen zum Stand der Technik zählt. Es handelt sich hierbei um Pumpen, die typischerweise in Rohren eingesetzt werden, die einen Durchmesser zwischen 500 - 1.600 mm aufweisen, mit Antriebsleistungen zwischen ca. 10 - 1.000 kW. Derartige stehend betriebene Axialpumpen, zu denen auch sogenannte Mixed Flow Pumps zählen, weisen einen inneren, im Wesentlichen rotationssymmetrischen Gehäuseteil auf, welcher den elektrischen Antriebsmotor aufnimmt, dessen Welle an der Unterseite des Gehäuses dichtend herausgeführt und mit einem Propeller als Pumpenlaufrad versehen ist. Dieser Propeller ist drehbar innerhalb eines Ringkanals zwischen dem inneren Gehäuseteil und einem äußeren Gehäuseteil angeordnet, die über Rippen miteinander verbunden sind und den Förderkanal der Pumpe bilden. Dabei ist der im Wesentlichen ringförmige, äußere Gehäuseteil zur Eingliederung in ein Rohr vorgesehen, in welchem die Pumpe angeordnet ist, und durch welche die von der Pumpe geförderte Flüssigkeit, insbesondere Wasser, druckseitig weitergeleitet wird.

Derartige Pumpen werden zur Förderung großer Wassermengen eingesetzt.

Um das Innere des inneren Gehäuseteils, in dem der elektrische Antriebsmotor angeordnet ist, gegen das Eindringen von Förderflüssigkeit zu schützen, ist der innere Gehäuseteil zur Welle hin abgedichtet. Im Bereich dieser Dichtungen ist innerhalb des inneren Gehäuseteils unterhalb des elektrischen Motors und dem Hauptlager eine Kammer vorgesehen, welche zur Aufnahme einer flüssigen Vorlage, typischerweise Öl, vorgesehen ist, die einerseits die Dichtungen kühlt und andererseits einen zusätzlichen Leckschutz bildet.

Diese Ölvorlage, die bei kleinen Pumpen dieser Bauart einige Liter umfasst, kann bei großen Pumpen 30 - 40 Liter umfassen. Um die Ölvorlage zu wechseln, ist zunächst die Pumpe aus dem Rohr oder dem entsprechenden Einbauraum zu entfernen, wonach dann eine Öffnung im inneren Gehäuseteil freizulegen ist, durch welche die Ölvorlage abfließen und später wieder durch eine neue ersetzt werden kann. Um den Abfluss des Öls durch die Öffnung zu gewährleisten, wird die Pumpe aus ihrer typischerweise stehenden Betriebsstellung, bei welcher die Längs- und Drehachse im Wesentlichen vertikal angeordnet ist, in eine horizontale Lage verbracht. Zum nachfolgenden Auffüllen der Ölvorlage ist die Pumpe entsprechend zu drehen, so dass die Einfüllöffnung oben angeordnet ist. Dies führt dazu, dass der Wechsel der Ölvorlage bei einer solchen Pumpe recht aufwändig ist, da die schwere Pumpe in eine liegende Stellung gebracht und dort entsprechend gehandhabt werden muss. Auch das Entleeren und Befüllen über die Öffnung nimmt erhebliche Zeit in Anspruch.

Vor diesem Hintergrund liegt der Erfindung die Aufgabe zugrunde, eine gattungsgemäße Strömungsmaschine so auszubilden, dass ein Wechsel der flüssigen Vorlage erheblich vereinfacht sowie auch eine Kontrolle der flüssigen Vorlage möglich ist. Weiterhin soll ein vereinfachtes Verfahren zur Kontrolle des Flüssigkeitstandes der flüssigen Dichtungsvorlage sowie zum Ablassen und Befüllen bereitgestellt werden sowie entsprechende vorrichtungsmäßige Ausgestaltungen zur Durchführung dieser Verfahren.
Diese Aufgabe wird gemäß der Erfindung durch eine Strömungsmaschine mit den in Anspruch 1 angegebenen Merkmalen gelöst. Der verfahrensmäßige Teil dieser Aufgabe wird gemäß den Ansprüchen 9, 10 und 12 gelöst. Vorteilhafte Ausgestaltungen der Erfindung sind in den Unteransprüchen, der nachfolgenden Beschreibung und der Zeichnung angegeben.
Die erfindungsgemäße Strömungsmaschine, insbesondere eine stehend betriebene Axialpumpe, weist einen inneren Gehäuseteil auf, in welchem eine Welle gelagert ist, die ein Propellerrad trägt, sowie einen äußeren Gehäuseteil, der typischerweise zur Eingliederung in eine Leitung, wie beispielsweise ein Rohr oder einen Schacht, vorgesehen ist. Zwischen dem inneren und dem äußeren Gehäuseteil ist ein Strömungspfad für die von dem Propellerrad geförderte Flüssigkeit gebildet. Der innere Gehäuseteil ist zur Aufnahme einer flüssigen Vorlage für mindestens eine Dichtung ausgebildet und weist mindestens eine Öffnung zum Zu- und Abführen der Vorlage auf. Gemäß der Erfindung ist im äußeren Gehäuseteil eine Ausnehmung vorgesehen, über welche die Öffnung im inneren Gehäuseteil von außen zugänglich ist und weiterhin ist gemäß der Erfindung im oder am inneren Gehäuseteil ein Ventil vorgesehen, mit dem eine durch die Öffnung führende Leitung absperrbar ist.

Grundgedanke der vorliegenden Erfindung ist es somit, die Strömungsmaschine so auszugestalten, dass eine Öffnung im inneren Gehäuseteil durch eine Ausnehmung im äußeren Gehäuseteil von außen zugänglich ist und dass darüber hinaus der Öffnung ein Ventil zugeordnet ist, so dass diese wahlweise abgesperrt oder geöffnet werden kann.

Hiermit ist die konstruktive Voraussetzung gegeben, von der Außenseite der Maschine, insbesondere von der Außenseite des äußeren Gehäuseteils, über die Ausnehmung einen Zugang zur Öffnung zu erhalten und darüber hinaus mittels des Ventils eine Leitungsverbindung zu dieser Öffnung freizugeben oder zu sperren. Diese konstruktive Anordnung ermöglicht es, die Strömungsmaschine, insbesondere die zum stehenden Betrieb vorgesehene Axialpumpe, bei der Kontrolle oder beim Wechsel der Vorlage stehend zu handhaben. Dabei ist die Öffnung zweckmäßigerweise so angeordnet, dass bei stehender Anordnung der Maschine die Vorlage durch die Öffnung vollständig entfernt und wieder ersetzt werden kann. Durch die Anordnung des Ventils ist es möglich, im Bereich der Öffnung eine fluiddichte Kupplungsvorrichtung vorzusehen, beispielsweise ein Innengewinde zum Einschrauben eines Rohres, welches dann durch Öffnen des Ventils gezielt mit dem Inneren des inneren Gehäuseteils, insbesondere der Vorlagenkammer, leitungsverbunden wird. Besonders vorteilhaft ist es, wenn das Ventil als Rückschlagventil ausgebildet ist, und zwar vorzugsweise als steuerbares Rückschlagventil, da auf diese Weise stets sichergestellt ist, dass nicht unbeabsichtigt Flüssigkeit aus der Vorlagenkammer entweichen kann, sondern nur dann, wenn das Ventil gezielt geöffnet wird. Ein solches Rückschlagventil gewährleistet somit das selbsttätige Verschließen der Öffnung und damit eine einfache Bedienung. Erst der gezielte Steuereingriff gibt die Leitungsverbindung frei.

Wenn, was vorteilhaft ist, die Gehäuseteile im Wesentlichen rotationssymmetrisch um eine vertikale Mittellängsachse der Strömungsmaschine angeordnet und ausgerichtet sind, dann ist es zweckmäßig, die Ausnehmung im äußeren Gehäuseteil radial fluchtend zur Öffnung im inneren Gehäuseteil anzuordnen, damit die Öffnung in einfacher Weise mit einem Werkzeug oder Rohrabschnitt zugänglich ist, der im Wesentlichen geradlinig verläuft. Es kann so ein gerades Rohrstück eingesetzt werden, um eine Leitungsverbindung zwischen der Öffnung und der Außenseite der Maschine herzustellen.

Zweckmäßigerweise ist innerhalb des inneren Gehäuseteils ein Behältnis für die Vorlage gebildet, typischerweise eine Vorlagenkammer, welche vorzugsweise hermetisch abschließbar ist, und zwar durch Verschließen der Öffnung. Die Öffnung ist gemäß einer vorteilhaften Weiterbildung der Erfindung in Höhe des Bodens des Behältnisses bzw. dieser Kammer angeordnet, da dann keine weitere Verrohrung innerhalb des Gehäuseinneren erforderlich ist und quasi ein bodenseitiger Abfluss gebildet wird. In Höhe des Bodens des Behältnisses ist dabei in stehender Anordnung der Pumpe gemeint, d. h. bei im Wesentlichen vertikaler Längsachse der Maschine. Die Öffnung bildet somit einen bodennahen Abfluss, über welchen die flüssige Vorlage vollständig entfernt werden kann. Gegebenenfalls kann über diese Öffnung die Vorlage eingefüllt werden, was besonders vorteilhaft ist, da dann über ein- und dieselbe Öffnung der Vorlagenaustausch stattfinden kann und keine weitere Montage oder Demontage erforderlich ist.

Grundsätzlich ist das Entleeren und Befüllen über eine einzige Öffnung im inneren Gehäuseteil möglich, wobei dies entweder druckunterstützt erfolgt und / oder über eine weitere, durch diese Öffnung eingeführte Leitung, über welche das verbleibende Kammervolumen durch Gas, typischerweise Umgebungsluft, druckausgeglichen wird. Dann wird beim Befüllen das Gas aus der Kammer abgezogen oder beim Entleeren Gas in die Kammer eingefüllt. Von der Handhabung vorteilhafter ist die gemäß der Erfindung alternativ vorgesehene Weiterbildung, bei der oberhalb der Öffnung eine verschließbare weitere (obere) Öffnung im inneren Gehäuseteil und dazu radial fluchtend eine Ausnehmung im äußeren Gehäuseteil vorgesehen ist. Dann kann diese obere Öffnung vorteilhaft zum Befüllen genutzt werden oder beim Entleeren der Vorlagekammer zum Druckausgleich dienen. Weiterhin kann über diese obere Öffnung beispielsweise durch Druckluftbeaufschlagung der Entleerungsvorgang erheblich beschleunigt werden, wodurch ein Vorlagenwechsel in nur wenigen Minuten möglich ist, auch bei großen Maschinen mit 30 Litern oder mehr Vorlagevolumen.

Zweckmäßigerweise sind sowohl die Öffnungen als auch die dazu fluchtenden Ausnehmungen jeweils mit einem Verschlusskörper verschließbar, wobei diese Verschlusskörper vorteilhaft so ausgestaltet sind, dass sie zum Strömungskanal hin bündig abschließen, d. h. an den Öffnungen zur Außenseite des Innengehäuseteils und an den Ausnehmungen zur Innenseite des Außengehäuseteils. Auf diese Weise wird durch die Öffnungen / Ausnehmungen der Strömungspfad innerhalb der Pumpe nicht behindert, auch besteht nicht die Gefahr, dass sich in diesem Bereich Partikel oder sonstige Verunreinigungen absetzen, die den Zugang behindern könnten.

Gemäß einer vorteilhaften Weiterbildung der Erfindung kann in einen Verschlusskörper für eine Öffnung des inneren Gehäuseteils ein Sensor, beispielsweise ein Wassersensor, eingegliedert sein, so dass eine zusätzliche Überwachung der Flüssigkeitsvorlage mittels des Sensors erfolgen kann. Der Sensor arbeitet dabei zweckmäßigerweise drahtlos und kommuniziert z. B. per Funk mit der Motorelektronik im oberen Bereich des inneren Gehäuseteils.

Um die Verschlusskörper schnell, einfach und haltbar anzubringen, ist es vorteilhaft, wenn diese mit einem Außengewinde versehen sind, das in entsprechend ausgestaltete Innengewinde der zugehörigen Ausnehmung bzw. der zugehörigen Öffnung eingreift. Solche Verschlusskörper sind typischerweise an der radial außen liegenden Seite mit einer Formschlussausnehmung für ein Werkzeug versehen, welches dort eingreifen kann und den Verschlusskörper z. B. magnetisch oder auch mechanisch festhält, wenn dieser aus dem Gewinde entfernt wird.

Mit einer so ausgestatteten Strömungsmaschine ist es nicht nur möglich, schnell und einfach die Vorlage zu wechseln, sondern es ist darüber hinaus auch die Kontrolle des Flüssigkeitsstandes der Vorlage möglich. Gemäß der Erfindung ist hierzu vorgesehen, dass zunächst einer oder mehrere gegebenenfalls vorhandene Verschlusskörper entfernt werden, wonach ein Rohrabschnitt einer Flüssigkeitsstandkontrollvorrichtung von außen durch die Ausnehmung im äußeren Gehäuseteil geführt und in der dazu fluchtenden Öffnung im inneren Gehäuseteil durch Einschrauben festgelegt wird. Alternativ kann hier eine Bajonettverbindung vorgesehen sein. Das pumpenseitige Ventil in oder an der Öffnung und ein oder mehrere Ventile der Flüssigkeitsstandkontrollvorrichtung werden sodann öffnend angesteuert, wonach der Flüssigkeitsstand innerhalb des inneren Gehäuseteils mittels der Vorrichtung ermittelt wird. Nach Ermittlung des Flüssigkeitsstandes werden die Ventile schließend angesteuert und die Vorrichtung entfernt, wonach die gegebenenfalls vorhandenen Verschlusskörper wieder eingesetzt werden. Es ist also bei stehender Maschine mit wenigen Handgriffen in einfacher und schneller Weise möglich, den Flüssigkeitsstand der Vorlage zu ermitteln, ohne diese ablassen zu müssen.

Das erfindungsgemäße Verfahren zum Flüssigkeitsablassen sieht vor, dass die Maschine stehend, d. h. mit im Wesentlichen vertikal angeordneter Längsachse, auf dem Boden abgestellt oder alternativ mittels eines Krans aufgehängt wird, wonach gegebenenfalls vorhandene Verschlusskörper entfernt und ein Rohrabschnitt von außen durch die Ausnehmung im äußeren Gehäuseteil geführt und in der dazu fluchtenden Öffnung im inneren Gehäuseteil festgelegt wird. Dabei oder danach wird das pumpenseitige Ventil öffnend angesteuert und die Flüssigkeit durch den Rohrabschnitt aus dem Pumpengehäuse abgezogen, wonach das Ventil verschlossen, der Rohrabschnitt entfernt und die Verschlusskörper wieder eingesetzt werden.

Dabei ist es besonders vorteilhaft, wenn ein Verschlusskörper aus der oberen Ausnehmung im äußeren Gehäuseteil entfernt wird, wonach der die obere Öffnung des inneren Gehäuseteils verschließende Verschlusskörper entfernt und die Verschlusskörper nach dem Flüssigkeitsablassen in umgekehrter Reihenfolge wieder angebracht werden. Je nach Anordnung der oberen Verschlusskörper kann der Verschlusskörper in der oberen Ausnehmung im äußeren Gehäuseteil auch verbleiben, wenn der Verschlusskörper für die obere Öffnung des inneren Gehäuseteils durch Eingriff in den zwischen äußerem und innerem Gehäuseteil gebildeten Ringkanal von oben zugänglich ist.

Das Öffnen der oberen Öffnung beschleunigt das Flüssigkeitsablassen durch die untere Öffnung, da hierdurch Luft in die Vorlagekammer nachströmen kann. Das Entleeren kann weiterhin dadurch beschleunigt werden, dass über die obere Öffnung eine Druckbeaufschlagung der Vorlagenkammer erfolgt, beispielsweise Druckluft zugeführt wird.

In analoger Weise kann gemäß der Erfindung die Dichtungsvorlage befüllt werden, indem, sofern noch vorhanden, zuerst ein Verschlusskörper aus vorzugsweise der oberen Ausnehmung im äußeren Gehäuseteil entfernt wird, wonach der Verschlusskörper aus der oberen Öffnung des inneren Gehäuseteils entfernt wird und ein Rohrabschnitt von außen durch die obere Ausnehmung im äußeren Gehäuseteil geführt und in der dazu fluchtenden oberen Öffnung im inneren Gehäuseteil festgelegt wird. Danach kann das Befüllen mit Flüssigkeit durch den Rohrabschnitt erfolgen, wobei der Rohrabschnitt nach erfolgtem Befüllen entfernt und die Verschlusskörper in umgekehrter Reihenfolge wieder angebracht werden. Grundsätzlich kann die Befüllung auch durch die untere Öffnung erfolgen, dann kann zur Beschleunigung des Verfahrens auch die obere Öffnung geöffnet werden, damit die überschüssige Luft entweichen kann. Bei dieser Anordnung ist eine druckunterstützte Befüllung möglich, die den Befüllungsprozess beschleunigt. Im Zusammenhang mit der Erfindung ist eine Flüssigkeitsstandkontrollvorrichtung vorgesehen, mit welcher der Flüssigkeitsstand in der Vorlagekammer ermittelt und überprüft werden kann. Diese Vorrichtung weist einen Rohrabschnitt mit einem Außengewinde am freien Ende des Rohrabschnitts auf. Innerhalb dieses Rohrabschnitts ist ein stabförmiger Teil angebracht, welcher innerhalb der durch das Außengewinde gebildeten Kontur liegt und der das Außengewinde in Axialrichtung überragt. Der rohrförmige Abschnitt ist an seinem anderen Ende um 90° abgebogen und weist einen transparenten Abschnitt mit mindestens einer Markierung auf. Der stabförmige Teil dient dazu, den Verschlusskörper des Rückschlagventils, welcher unmittelbar hinter der Öffnung innerhalb des inneren Gehäuseteils innerhalb der Vorlagenkammer angeordnet ist, beim Einschrauben des Rohrabschnitts in die Öffnung zu öffnen. Dabei ist die Vorrichtung zum Kontrollieren des Füllstandes so anzubringen, dass der um 90° abgebogene rohrförmige Abschnitt nach oben und parallel zur Längsachse der Maschine, also bei stehender Maschine vertikal angeordnet ist. Dann kann im Bereich des transparenten Abschnittes der Füllstand ermittelt werden. In dem transparenten Bereich wird die Füllstandshöhe angezeigt, die auch innerhalb der Vorlagenkammer vorhanden ist, da diese nach dem Prinzip der kommunizierenden Röhren miteinander verbunden sind.

Gemäß einem vorteilhaften Beispiel ist die Füllstandskontrollvorrichtung so ausgelegt, dass der Rohrabschnitt nahe seinen Enden jeweils mit einem Absperrventil versehen ist. Diese Absperrventile werden zum Zwecke der Flüssigkeitsstandkontrolle geöffnet und danach wieder verschlossen, damit die in der Vorrichtung befindliche Flüssigkeit beim Abschrauben nicht unbeabsichtigt in die Umgebung gelangen kann. Eine erfindungsgemäße Vorrichtung zum Ablassen der flüssigen Vorlage einer Dichtung einer Strömungsmaschine, insbesondere einer stehend betriebenen Axialpumpe, weist einen Rohrabschnitt mit einem Außengewinde am freien Ende des Rohrabschnitts sowie einen stabförmigen Teil auf, welcher innerhalb der durch das Außengewinde gebildeten Kontur liegt und der das Außengewinde in Axialrichtung überragt. Die Vorrichtung ist darüber hinaus mit einem Absperrventil versehen. Über den stabförmigen Teil, der entweder fest an dem Rohrabschnitt angebracht sein kann oder der axial beweglich innerhalb des Rohrabschnittes geführt und von außen steuerbar ist, wird nach oder bei dem Einschrauben des Gewindes in die untere Öffnung des inneren Gehäuseteils das Rückschlagventil geöffnet, indem das Stabende gegen den Schließkörper drückt und diesen von seinem Dichtsitz abhebt. Das Absperrventil ist zweckmäßigerweise vorgesehen, um das Ablassen an der Vorrichtung steuern zu können, kann gegebenenfalls jedoch auch entfallen, wenn andere gleichwirkende Mittel vorgesehen sind, beispielsweise eine absaugende Pumpe, die mit dem maschinenfernen Ende des Rohrabschnitts leitungsverbunden ist.

Schließlich ist im Zusammenhang mit der Erfindung eine Vorrichtung zum Befüllen der Dichtungsvorlage vorgesehen, die aus einem geraden Rohrabschnitt mit einem Außengewinde am freien Ende und einem an seinem maschinenfernen Ende um 90° abgewinkelten und trichterförmig ausgeweiteten Teil ausgebildet ist. Eine solche Vorrichtung kann durch die obere Ausnehmung in die obere Öffnung des inneren Gehäuseteils eingeschraubt werden, wonach der Befüllvorgang durch Einfüllen der Flüssigkeit in den trichterförmig aufgeweiteten Teil erfolgt. Da die obere Öffnung oberhalb des Flüssigkeitsspiegels der Vorlage angeordnet ist, kann nach erfolgtem Befüllvorgang die nahezu vollständig entleerte Befüllvorrichtung aus der oberen Öffnung herausgeschraubt werden, wonach zunächst die Öffnung und dann die fluchtend dahinterliegende Ausnehmung im äußeren Gehäuseteil mit entsprechenden Verschlussstopfen versehen werden. Diese Lösung ermöglicht eine sehr schnelle und komfortable Kontrolle sowie auch den Austausch der Vorlage, ohne dass die Maschine aus ihrer stehenden Stellung bewegt werden muss. Dabei können die Vorrichtung zur Flüssigkeitsstandkontrolle, die Vorrichtung zum Befüllen der Dichtungsvorlage und die Vorrichtung zum Ablassen der Vorlage kombiniert ausgebildet sein, nämlich mit einem Rohrabschnitt und einem Gewinde am freien Ende sowie einer darin angeordneten Stange zur Steuerung des Rückschlagventils und mit einem 90°-Krümmer am anderen Ende, an dem dann wahlweise der trichterförmige Teil oder der durchsichtige Rohrabschnitt zur Füllstandskontrolle angeschraubt wird. Zum Ablassen wird der 90°-Rohrkrümmer um 180° gedreht, so dass das Ende nach unten gerichtet ist. Dabei kann ein Absperrventil innerhalb des Rohrabschnitts vorgesehen sein oder auch an anderer geeigneter Stelle.
Die Erfindung ist nachfolgend anhand eines in der Zeichnung dargestellten Ausführungsbeispiels näher erläutert. Es zeigen:
- Fig. 1: in stark vereinfachter, schematischer Darstellung einen Längsschnitt durch eine stehend betriebene Axialpumpe gemäß der Erfindung,
- Fig. 2: einen Teil des Längsschnitts gemäß Fig. 1 in vergrößerter Darstellung,
- Fig. 3: die Pumpe beim Ablassen der Ölvorlage in Darstellung entsprechend Fig. 2,
- Fig. 4: die Pumpe beim Einfüllen der Ölvorlage in Darstellung entsprechend Fig. 2 und
- Fig. 5: die Pumpe beim Kontrollieren des Füllstandes der Ölvorlage in Darstellung entsprechend Fig. 2.

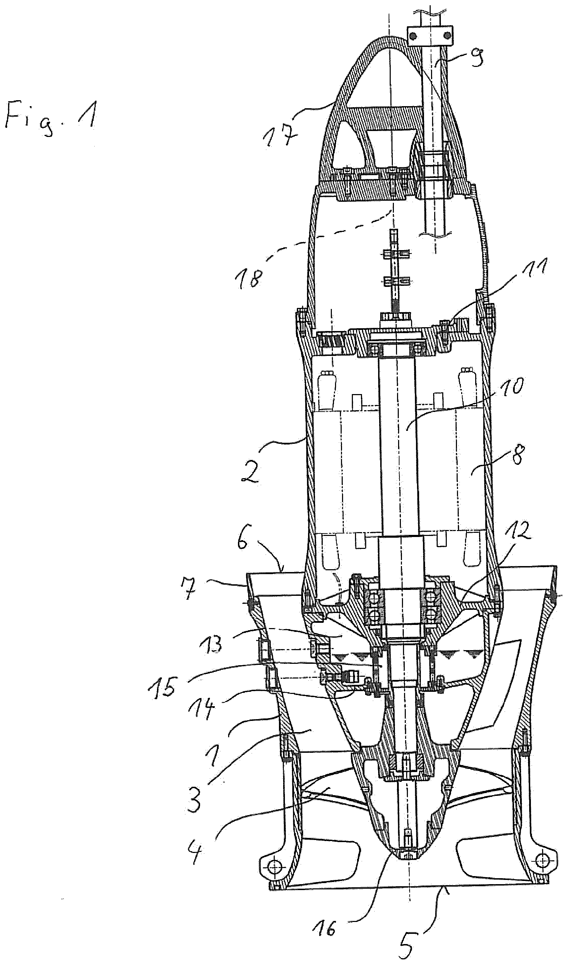

In ihrem grundsätzlichen Aufbau entspricht die in Fig. 1 im Längsschnitt dargestellte, stehend betriebene Axialpumpe dem Stand der Technik, typischerweise einem Aufbau entsprechend den Grundfos-Pumpen des Typs KPL (Propellerversion) oder KWM (Impellerversion). Ein äußerer Gehäuseteil 1 umgibt einen inneren Gehäuseteil 2 ringförmig und bildet zwischen diesen Gehäuseteilen 1 und 2 einen ringförmigen Strömungskanal 3 für den von einem Propeller 4 erzeugten Förderstrom von einer unteren Einlassöffnung 5 zu einer oberen, ringförmig den inneren Gehäuseteil 2 umgebenden Auslassöffnung 6. Die Pumpe ist zur Eingliederung in einen zylindrischen Hohlkörper, z. B. ein Rohr, vorgesehen und weist hierzu am oberen Ende des äußeren Gehäuseteils 1 eine umlaufende Dichtung 7 auf, mit der der äußere Gehäuseteil 1 gegenüber dem Einbauraum abgedichtet ist.

Der innere Gehäuseteil 2 erstreckt sich in der in Fig. 1 dargestellten aufrecht stehenden Betriebsposition deutlich über den äußeren Gehäuseteil 1 und setzt zusammen mit dem in Fig. 1 nicht dargestellten Hohlkörper, in welchem die Pumpe sitzt, den durch die Auslassöffnung 6 gebildeten Ringkanal nach oben fort.

Der äußere und der innere Gehäuseteil 1 und 2 sind über Rippen miteinander verbunden, welche den Strömungskanal 3 durchsetzen. Der innere Gehäuseteil 2 nimmt einen elektrischen Antriebsmotor 8 auf, dessen Versorgungskabel 9 nach oben aus dem Gehäuse 2 herausgeführt ist. Der Motor 8 weist eine Welle 10 auf, die ein oberes motorseitiges Ende aufweist, das in einer Querwand 11 des inneren Gehäuseteils 2 gelagert ist und die sich im Übrigen mit ihrem freien Ende nach unten erstreckt. An den Antriebsmotor 8 nach unten anschließend ist innerhalb einer Querwand 12 des inneren Gehäuseteils 2 eine weitere Lagerung vorgesehen. Diese untere Querwand 12, welche die unteren Lager der Welle 10 aufnimmt, begrenzt eine innerhalb des inneren Gehäuseteils 2 vorgesehene, hermetisch abschließbare Kammer 13 für eine flüssige Dichtungsvorlage nach oben hin. Nach unten hin ist diese Kammer 13 durch eine Querwand 14 begrenzt, die den Boden der Kammer bildet. Im Bereich der Kammer 13 ist eine Dichtung 15 vorgesehen, welche die Welle 10 gegenüber dem inneren Gehäuseteil 2 abdichtet.

Unter der Querwand 14 sitzt der Propeller 4 auf der Welle 10. Der innere Gehäuseteil 2 wird nach unten durch ein unteres Abschlussbauteil 16 begrenzt, welches in seiner äußeren Kontur strömungsoptimiert ist und bis in die Einlassöffnung 5 reicht. Das obere Ende des inneren Gehäuseteils 2 wird durch ein oberes Abschlussbauteil 17 gebildet, welches ebenfalls strömungsoptimiert ist und durch welches das Versorgungskabel 9 nach oben herausgeführt ist.

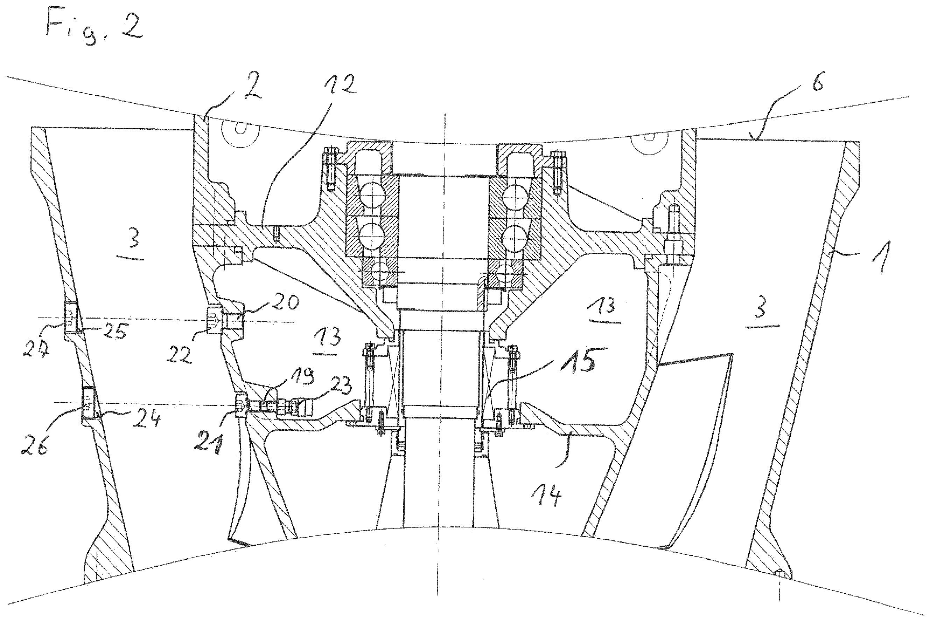

Die Axialpumpe ist im Wesentlichen rotationssymmetrisch in Bezug auf ihre Mittel-Längsachse 18, die in Betrieb der Pumpe im Wesentlichen vertikal angeordnet ist. Wie aus Fig. 2 ersichtlich, weist der innere Gehäuseteil 2 im Bereich der Kammer eine untere Öffnung 19 sowie mit Abstand darüber eine obere Öffnung 20 auf. Die Öffnungen 19 und 20 sind als Gewindebohrungen ausgebildet und mit einem Verschlussstopfen 21 für die untere Öffnung und 22 für die obere Öffnung, jeweils in Form von Kopfschrauben, verschlossen. Die untere Öffnung 19 liegt unmittelbar über der die Kammer 13 nach unten begrenzenden Querwand 14, dem Boden der Kammer 13. Die obere Öffnung 20 liegt mit Abstand darüber, und zwar oberhalb der Dichtung 15. Die Kammer 13 ist zur Aufnahme einer Ölvorlage vorgesehen, welche die Dichtung 15 umgibt bzw. dieser vorgelagert ist. Die Ölvorlage füllt die Kammer 13 nicht vollständig aus, sondern nur bis über die Dichtung 15, so dass sich der Flüssigkeitsspiegel der Ölvorlage im bestimmungsgemäßen Betrieb gerade unterhalb der oberen Öffnung 20 befindet.

In der unteren Öffnung 19, die von außen durch den Verschlussstopfen 21 verschlossen ist, ist von der Innenseite ein Rückschlagventil 23 eingeschraubt, welches einen federkraftbeaufschlagten Ventilkörper aufweist, der in Richtung der unteren Öffnung 19 nach außen hin selbsttätig sperrt und in Gegenrichtung durch Druckbeaufschlagung oder mechanische Beaufschlagung von seinem Ventilsitz abgehoben, d. h. öffnend angesteuert werden kann.

Radial fluchtend zu der unteren Öffnung 19 in der Wandung des inneren Gehäuseteils 2 ist im äußeren Gehäuseteil 1 eine Ausnehmung 24 in Form einer Bohrung vorgesehen. Radial fluchtend zu der oberen Öffnung 20 ist eine Ausnehmung 25 im äußeren Gehäuseteil 1 vorgesehen, die ebenfalls als Bohrung ausgebildet ist. Die Ausnehmungen 24 und 25 sind mit entsprechenden Verschlussstopfen 26 und 27 verschlossen. Die Ausnehmungen 24 und 25 sind mit Gewinde versehen, in das ein entsprechendes Gewinde der Verschlussstopfen 26 bzw. 27 eingreift.

Die Verschlussstopfen 21 und 22 sowie 26 und 27 sind so ausgestaltet, dass sie bündig in die Gehäuseteile 1 bzw. 2 eingegliedert sind, insbesondere auf der zum Strömungskanal 3 liegenden Seite. Anstelle einer bündigen Eingliederung kann auch eine strömungsgünstige, leicht in den Strömungskanal 3 hineinragende Form gewählt werden.

Durch die Öffnungen 19 und 20 sowie die Ausnehmungen 24 und 25 ist es möglich, bei aufrecht stehender oder hängender Axialpumpe, also wenn die Pumpe die in Fig. 1 dargestellte Stellung aufweist, bei der die Einlassöffnung 5 an der Unterseite der Pumpe angeordnet ist, kann die in der Kammer 13 befindliche Ölvorlage sowohl hinsichtlich des Ölstandes kontrolliert werden, als auch schnell und einfach ausgetauscht werden. Hierzu ist eine Vorrichtung vorgesehen, welche einen langgestreckten, geraden Rohrabschnitt 28 aufweist, der an seinem freien Ende mit einem Außengewinde versehen ist, mit dem er in das Gewinde der unteren Öffnung 19 einschraubbar ist. Der Rohrabschnitt 28 weist weiter eine an seiner Innenseite befestigte und über das freie Ende hinausragende Steuerstange 29 auf, die so ausgelegt und angeordnet ist, dass beim Einschrauben des freien Endes des Rohrabschnitts 28 in die untere Öffnung 19 das freie Ende der Steuerstange 29 den Ventilkörper des Rückschlagventils 23 öffnend ansteuert.

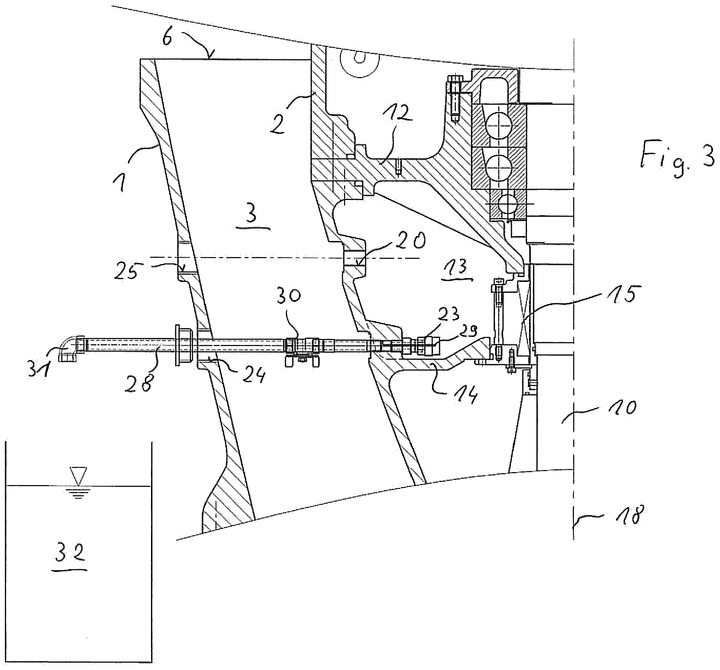

Weiterhin weist der Rohrabschnitt 28 ein Absperrventil 30 auf sowie am anderen Ende einen Rohrkrümmer 31. Mit dieser Vorrichtung kann, wie anhand von Fig. 3 dargestellt ist, nach Entfernen des unteren Verschlussstopfens 26 sowie des Verschlussstopfens 21 eine Verbindung des Rohrabschnitts 28 mit der unteren Öffnung 19 hergestellt werden, bei deren Verbinden gleichzeitig das Rückschlagventil 23 durch die Steuerstange 29 öffnend angesteuert wird. In dieser, in Fig. 3 dargestellten Stellung kann die Ölvorlage aus der Kammer 13 vollständig ablaufen und in einem geeigneten Auffanggefäß 32 neben der Pumpe aufgefangen werden. Dabei wird zweckmäßigerweise auch der obere Verschlussstopfen 27 sowie der Verschlussstopfen 22 aus der oberen Öffnung 20 entfernt, damit Luft nachströmen kann, welche das Volumen des durch den Rohrabschnitt 28 aus der Kammer 13 abgeflossenen Öls ersetzt. Gegebenenfalls kann der Ablassvorgang des Öls dadurch beschleunigt werden, dass an das in Fig. 3 freie Ende des Rohrabschnitts 28 bzw. an den Rohrkrümmer 31 eine Absaugpumpe angeschlossen wird und / oder über die obere Öffnung 20 z. B. mittels eines Kompressors Gasdruck auf die Kammer 13 aufgebracht wird. Das Absperrventil 30 dient dabei zur Freigabe des Ablassvorganges bzw. dessen Beendigung. Es sorgt dafür, dass das Vorlageöl nur in den dafür bestimmten Behältnissen verbleibt.

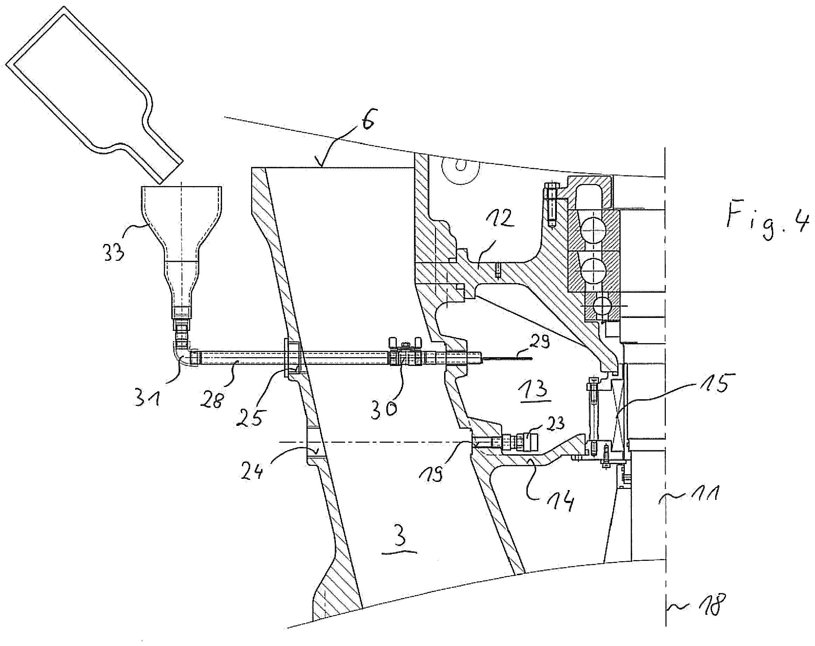

Der vorbeschriebene Rohrabschnitt 28 mit dem Rohrkrümmer 31, der Steuerstange 29 und dem Gewinde am freien Ende kann auch zum Anbringen in der oberen Öffnung 20, wie in Fig. 4 dargestellt, zum Befüllen der Ölvorlage verwendet werden. Hierzu ist der Rohrkrümmer 31 um 180° zu drehen und mit einem trichterförmigen Bauteil 33 zu versehen. Die untere Öffnung 29 ist dabei durch das Rückschlagventil 23 selbsttätig verschlossen, so dass nach vorherigem Entleeren der Ölvorlage entsprechend Fig. 3 nachfolgend die Kammer 13 wieder mit Öl befüllt werden kann.

Das Absperrventil 30 ist so gestaltet, dass es sowohl durch die untere als auch durch die obere Ausnehmung 24, 25 einschließlich des Betätigungshebels hindurchgeführt werden kann. Die Betätigung des Absperrventils 30 kann entweder von Hand oder mittels eines Werkzeugs, welches von oben über die Auslassöffnung 6 eigeführt wird, erfolgen.

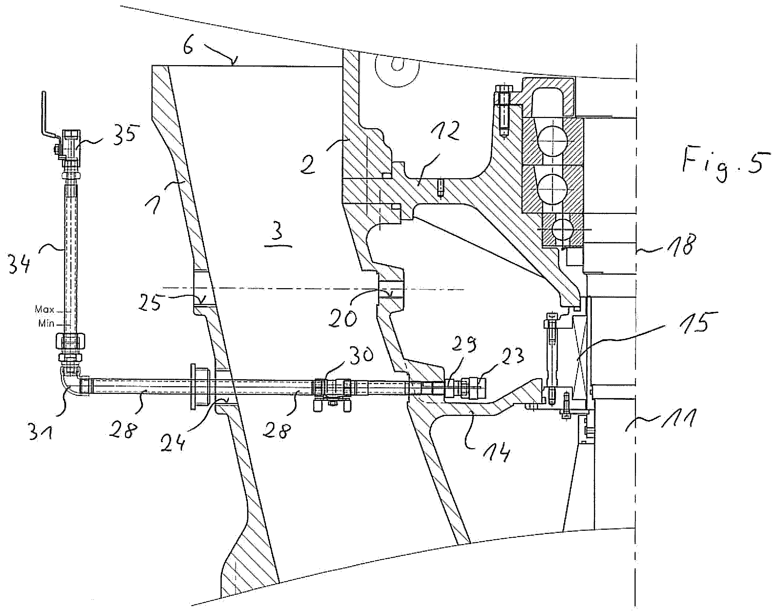

Schließlich kann mit Hilfe des vorbeschriebenen Rohrabschnitts 28 mit der Steuerstange 29 am freien Ende und dem Rohrkrümmer 31 am davon abgewandten Ende auch eine Füllstandskontrolle der Kammer 13 erfolgen, wenn an den Rohrkrümmer 31 ein transparenter Rohrabschnitt 34 angeschraubt wird, an dessen anderem Ende wiederum ein Absperrventil 35 vorgesehen ist. Diese durch den transparenten Rohrabschnitt 34 und das Absperrventil 35 modifizierte Vorrichtung wird in gleicher Weise wie bei der anhand von Fig. 3 dargestellten Ablassvorrichtung in der unteren Öffnung 19 eingeschraubt, jedoch im Unterschied zur Ablassvorrichtung mit nach oben gerichtetem Rohrkrümmer 31 und dem sich daran anschließenden transparenten Rohrabschnitt 34, so wie dies anhand von Fig. 5 dargestellt ist. Auch in dieser Stellung ist das Rückschlagventil 23 durch die Steuerstange 29 öffnend angesteuert, so dass nach dem Öffnen der Absperrventile 30 und 35 der Flüssigkeitsspiegel innerhalb der Kammer 13 und im transparenten Rohrabschnitt 34 übereinstimmt, so dass dieser kontrolliert werden kann. In dem transparenten Rohrabschnitt 34 sind an der Außenseite zwei Markierungen (min, max) angebracht, anhand derer dann abgelesen werden kann, ob der Vorlageölstand innerhalb der vorgegebenen Grenzen liegt. Die obere Öffnung 20 ist dabei geöffnet, um für einen Druckausgleich zu sorgen. Nach Kontrolle des Ölstandes werden die Absperrventile 30 und 35 geschlossen, wonach die Vorrichtung aus der unteren Öffnung 19 herausgeschraubt und durch die untere Ausnehmung 24 aus der Pumpe herausgezogen wird. Abschließend sind die Verschlussstopfen 21 und 22 für die untere und obere Öffnung anzubringen sowie die Verschlussstopfen 26 und 27 für die Ausnehmungen 24 und 25, wonach die Pumpe weiter betrieben werden kann.

Zum Wechseln der Ölvorlage in der Kammer 13 werden also zunächst die Verschlussstopfen 26 und 27 entfernt, sowie nachfolgend die Verschlussstopfen 21 und 22, wonach die Vorrichtung bestehend aus Rohrabschnitt 28 und Steuerstange 29 in die untere Öffnung 19 eingeschraubt wird. Nach Öffnen des Absperrventils 30 fließt die Ölvorlage aus der Kammer 13 in das Auffanggefäß 32. Wenn dies vollständig erfolgt ist, wird die Vorrichtung aus der unteren Öffnung 19 entfernt und in der oberen Öffnung 20 festgelegt, des Weiteren wird der Trichter 35 an den Rohrkrümmer 31 angeschraubt, wonach die Befüllung der Kammer 13 erfolgen kann. Wenn die vorbestimmte Menge eingefüllt ist, wird die Vorrichtung entfernt, die Öffnungen 19 und 20 mit deren Verschlussstopfen 21 und 22 versehen sowie die Ausnehmungen 24 und 25 durch Verschlussstopfen 26 und 27 verschlossen.

### Bezugszeichenliste

- 1: - äußerer Gehäuseteil
- 2: - innerer Gehäuseteil
- 3: - Strömungskanal
- 4: - Propeller
- 5: - Einlassöffnung
- 6: - Auslassöffnung
- 7: - Dichtung
- 8: - Antriebsmotor
- 9: - Versorgungskabel
- 10: - Welle
- 11: - obere Querwand
- 12: - untere Querwand
- 13: - Kammer für Ölvorlage
- 14: - Querwand unten, Boden der Kammer 13
- 15: - Dichtung
- 16: - unteres Abschlussteil
- 17: - oberes Abschlussteil
- 18: - Mittellängsachse, Drehachse
- 19: - untere Öffnung
- 20: - obere Öffnung
- 21: - Verschlussstopfen von 19
- 22: - Verschlussstopfen von 20
- 23: - Rückschlagventil
- 24: - untere Ausnehmung
- 25: - obere Ausnehmung
- 26: - Verschlussstopfen von 24
- 27: - Verschlussstopfen von 25
- 28: - Rohrabschnitt
- 29: - Steuerstange
- 30: - Absperrventil
- 31: - Rohrkrümmer
- 32: - Auffanggefäß
- 33: - Trichter
- 34: - transparenter Rohrabschnitt
- 35: - Absperrventil

## Patentansprüche

1. Strömungsmaschine, insbesondere stehend betriebene Axialpumpe, mit einem inneren Gehäuseteil (2), in welchem eine ein Propellerrad (4) tragende Welle (10) gelagert ist, und mit einem äußeren Gehäuseteil (1), wobei zwischen innerem und äußerem Gehäuseteil ein Strömungspfad (3) für die vom Propellerrad (4) geförderte Flüssigkeit gebildet ist und der innere Gehäuseteil (2) zur Aufnahme einer flüssigen Vorlage für mindestens eine Dichtung (15) ausgebildet ist und mindestens eine Öffnung (19) zum Zu- und Abführen der Vorlage aufweist, wobei im äußeren Gehäuseteil (1) eine Ausnehmung (24) vorgesehen ist, über welche die Öffnung (19) von außen zugänglich ist, **dadurch gekennzeichnet, dass** im oder am inneren Gehäuseteil (2) ein Ventil (23) vorgesehen ist, mit dem eine durch die Öffnung (19) führende Leitung absperrbar ist.

2. Strömungsmaschine nach Anspruch 1, **dadurch gekennzeichnet, dass** das Ventil ein steuerbares Rückschlagventil (23) ist.

3. Strömungsmaschine nach Anspruch 1 oder 2, **dadurch gekennzeichnet, dass** die Gehäuseteile (1, 2) im Wesentlichen rotationssymmetrisch um eine vertikale Mittellängsachse (18) der Strömungsmaschine sind und die Ausnehmung (24) radial fluchtend zur Öffnung (19) angeordnet ist.

4. Strömungsmaschine nach einem der vorhergehenden Ansprüche, **dadurch gekennzeichnet, dass** innerhalb des inneren Gehäuseteils (2) ein Behältnis (13) für die Vorlage gebildet ist und dass die Öffnung (19) in Höhe des Bodens des Behältnisses (13) angeordnet ist.

5. Strömungsmaschine nach einem der vorhergehenden Ansprüche, **dadurch gekennzeichnet, dass** oberhalb der Öffnung (19) eine verschließbare weitere (obere) Öffnung (20) im inneren Gehäuseteil (2) und dazu radial fluchtend eine Ausnehmung (25) im äußeren Gehäuseteil (1) vorgesehen ist.

6. Strömungsmaschine nach einem der vorhergehenden Ansprüche, **dadurch gekennzeichnet, dass** die Öffnungen (19, 20) und / oder die Ausnehmungen (24, 25) durch jeweils einen Verschlusskörper (21, 22, 26, 27) verschließbar sind, wobei der Verschlusskörper (21, 22, 26, 27) zumindest zum Strömungspfad (3) hin vorzugsweise bündig in das Gehäuse (1, 2) eingegliedert ist.

7. Strömungsmaschine nach Anspruch 6, **dadurch gekennzeichnet, dass** in einem Verschlusskörper für eine Öffnung des inneren Gehäuseteils ein Wassersensor eingegliedert ist.

8. Strömungsmaschine nach Anspruch 6 oder 7, **dadurch gekennzeichnet, dass** die Ausnehmungen (24, 25) und / oder die Öffnungen (19, 20) mit einem Innengewinde versehen sind, in welches ein Außengewinde des zugehörigen Verschlusskörpers (21, 22, 26, 27) eingreift.

9. Verfahren zum Kontrollieren des Flüssigkeitsstands der flüssigen Vorlage einer Dichtung einer Strömungsmaschine, insbesondere einer stehend betriebenen Axialpumpe, nach einem der vorhergehenden Ansprüche, **dadurch gekennzeichnet, dass** nach Entfernen von einem oder mehreren gegebenenfalls vorhandenen Verschlusskörpern (21, 22, 26, 27) ein Rohrabschnitt (28) einer Flüssigkeitsstandkontrollvorrichtung von außen durch die Ausnehmung (24) im äußeren Gehäuseteil (1) geführt und in der dazu fluchtenden Öffnung (19) im inneren Gehäuseteil (2) festgelegt wird, dass das pumpenseitige Ventil (23) in oder an der Öffnung (19) und ein oder mehrere Ventile (30, 35) der Flüssigkeitsstandkontrollvorrichtung öffnend angesteuert werden, wonach der Flüssigkeitsstand innerhalb des inneren Gehäuseteils (2) mittels der Vorrichtung ermittelt wird, wonach die Ventile (30, 35) schließend angesteuert werden und die Vorrichtung entfernt wird, wonach die zuvor entfernten Verschlusskörper (21, 22, 26, 27) wieder eingesetzt werden.

10. Verfahren zum Ablassen der flüssigen Vorlage einer Dichtung einer Strömungsmaschine, insbesondere einer stehend betriebenen Axialpumpe, nach einem der vorhergehenden Ansprüche, **dadurch gekennzeichnet, dass** nach Entfernen von einem oder mehreren gegebenenfalls vorhandenen Verschlusskörpern (21, 22, 26, 27) ein Rohrabschnitt (28) von außen durch die Ausnehmung (24) im äußeren Gehäuseteil (1) geführt und in der dazu fluchtenden Öffnung (19) im inneren Gehäuseteil (2) festgelegt wird, wobei das pumpenseitige Ventil (23) öffnend angesteuert wird und die Flüssigkeit durch den Rohrabschnitt (28) aus dem Pumpengehäuse (2) entfernt wird, wonach die vorgenannten Arbeitsschritte in umgekehrter Reihenfolge erfolgen.

11. Verfahren nach Anspruch 10, **dadurch gekennzeichnet, dass** zum Flüssigkeitablassen vorzugsweise zunächst ein Verschlusskörper (27) aus der oberen Ausnehmung (25) im äußeren Gehäuseteil (1) entfernt wird, wonach der die obere Öffnung (20) des inneren Gehäuseteils (2) verschließende Verschlusskörper (22) entfernt und die Verschlusskörper (22, 27) nach dem Flüssigkeitablassen wieder angebracht werden.

12. Verfahren zum Befüllen der flüssigen Vorlage einer Dichtung einer Strömungsmaschine, insbesondere einer stehend betriebenen Axialpumpe, nach einem der vorhergehenden Ansprüche, **dadurch gekennzeichnet, dass**, sofern vorhanden, zuerst ein Verschlusskörper (27) aus der oberen Ausnehmung (25) im äußeren Gehäuseteil (1) entfernt wird, wonach der Verschlusskörper (22) aus der oberen Öffnung (20) des inneren Gehäuseteils (2) entfernt wird und ein Rohrabschnitt (28) von außen durch die obere Ausnehmung (25) im äußeren Gehäuseteil (1) geführt und in der dazu fluchtenden oberen Öffnung (20) im inneren Gehäuseteil (2) festgelegt wird, wonach das Befüllen mit Flüssigkeit durch den Rohrabschnitt (28) erfolgt, und dass nach dem Befüllen mit Flüssigkeit der Rohrabschnitt (28) entfernt wird und die Verschlusskörper (22, 27) in umgekehrter Reihenfolge wieder angebracht werden.

## Claims

1. A flow machine, in particular an axial pump operated in a standing manner, with an inner housing part (2), in which a shaft (10) carrying a propeller wheel (4) is mounted, and with an outer housing part (1), wherein a flow path (3) for the fluid delivered by the propeller wheel (4) is formed between the inner and outer housing part, and the inner housing part (2) is designed for receiving a fluid buffer for at least one seal (15) and comprises at least one opening (19) for the supply and drainage of the buffer, wherein a recess (24) is provided in the outer housing part (1), via which recess the opening (19) is accessible from the outside, **characterised in that** a valve (23) is provided in or on the inner housing part (2), with which valve a conduit leading through the opening (19) can be blocked.

2. A flow machine according to claim 1, **characterised in that** the valve is a controllable check valve (23).

3. A flow machine according to claim 1 or 2, **characterised in that** the housing parts (1, 2) are arranged essentially rotationally symmetrically around a vertical middle longitudinal axis (18) of the flow machine, and the recess (24) is arranged in a manner radially aligned to the opening (19).

4. A flow machine according to one of the preceding claims, **characterised in that** a receptacle (13) for the buffer is formed within the inner housing part (2), and that the opening (19) is arranged at the height of the base of the receptacle (13).

5. A flow machine according to one of the preceding claims, **characterised in that** above the opening (19), a closable further (upper) opening (20) is provided in the inner housing part (2), and a recess (25) is provided in the outer housing part (1) in a manner radially aligned thereto.

6. A flow machine according to one of the preceding claims, **characterised in that** the openings (19, 20) and/or the recesses (24, 25) are closable in each case by a closure body (21, 22, 26, 27), wherein the closure body (21, 22, 26, 27) at least towards the flow path (3) is integrated into the housing (1, 2), preferably in an aligned manner.

7. A flow machine according to claim 6, **characterised in that** a water sensor is integrated in a closure body for an opening of the inner housing part.

8. A flow machine according to claim 6 or 7, **characterised in that** the recesses (24, 25) and/or the openings (19, 20) are provided with an inner thread, into which an outer thread of the associated closure body (21, 22, 26, 27) meshes.

9. A method for controlling the fluid level of the fluid buffer of a seal of a flow machine, in particular of an axial pump operated in a standing manner, according to one of the preceding claims, **characterised in that** after removal of one or more closure bodies (21, 22, 26, 27) which are present as the case may be, a pipe section (28) of a fluid level control device is led from the outside through the recess (24) in the outer housing part (1) and is fixed in the opening (19) which is aligned thereto and which is in the inner housing part (2), that the pump-side valve (23) in or on the opening (19) and one or more valves (30, 35) of the fluid level control device are activated in an opening manner, whereupon the fluid level within the inner housing part (2) is determined by way of the device, whereupon the valves (30, 35) are activated in a closing manner and the device is removed, whereupon the previously removed closure bodies (21, 22, 26, 27) are inserted again.

10. A method for draining the fluid buffer of a seal of a flow machine, in particular of an axial pump operated in a standing manner, according to one of the preceding claims, **characterised in that** after removal of one or more closure bodies (21, 22, 26, 27) which are present as the case may be, a pipe section (28) is led from the outside through the recess (24) in the outer housing part (1) and is fixed in the opening (19) which is aligned thereto and which is in the inner housing part (2), wherein the pump-side valve (23) is activated in an opening manner and the fluid is removed through the pipe section (28) out of the pump housing (2), whereupon the previously mentioned working steps are effected in the reverse sequence.

11. A method according to claim 10, **characterised in that** for the drainage of fluid, preferably firstly a closure body (27) is removed from the upper recess (25) in the outer housing part (1), whereupon the closure body (22) closing the upper opening (20) of the inner housing part (2) is removed and the closure bodies (22, 27) are attached again after the fluid drainage.

12. A method for filling the fluid buffer of a seal of a flow machine, in particular of an axial pump operated in a standing manner, according to one of the preceding claims, **characterised in that** inasmuch as is present, firstly a closure body (27) is removed from the upper recess (25) in the outer housing part (1), whereupon the closure body (22) is removed from the upper opening (20) of the inner housing part (2), and a pipe section (28) is led from the outside through the upper recess (25) in the outer housing part (1) and is fixed in the upper opening (20) which is aligned thereto and which is in the inner housing part (2), whereupon the filling with fluid is effected through the pipe section (28) and that after the filling with fluid, the pipe section (28) is removed and the closure bodies (22, 27) are attached again in the reverse sequence.

## Revendications

1. Turbomachine, notamment pompe axiale fonctionnant en position verticale, avec une partie intérieure de carter (2) dans laquelle est monté un arbre (10) portant une roue à hélice (4), et avec une partie extérieure de carter (1), un trajet de flux (3) pour le liquide transporté par la roue à hélice (4) étant établi entre la partie intérieure de carter et la partie extérieure de carter et la partie intérieure de carter (2) étant configurée pour recevoir un dépôt préalable liquide pour au moins un joint d'étanchéité (15) et comportant au moins une ouverture (19) pour acheminer et évacuer le dépôt préalable liquide, un évidement (24) étant prévu dans la partie extérieure de carter (1) par lequel il est possible d'accéder de l'extérieur à l'ouverture (19), **caractérisée en ce qu'**une valve (23) est prévue dans ou sur la partie intérieure de carter (2), à l'aide de laquelle un conduit passant par l'ouverture (19) peut être fermé.

2. Turbomachine selon la revendication 1, **caractérisée en ce que** la valve est une valve anti-retour (23) susceptible d'être commandée.

3. Turbomachine selon la revendication 1 ou 2, **caractérisée en ce que** les parties de carter (1, 2) présentent une forme sensiblement symétrique de révolution autour d'un axe longitudinal central (18) vertical de la turbomachine et **en ce que** l'évidement (24) est disposé radialement aligné sur l'ouverture (19).

4. Turbomachine selon l'une des revendications précédentes, **caractérisée en ce qu'**un contenant (13) pour le dépôt préalable est formé à l'intérieur de la partie intérieure de carter (2) et **en ce que** l'ouverture (19) est disposée à hauteur du fond du contenant (13).

5. Turbomachine selon l'une des revendications précédentes, **caractérisée en ce qu'**il est prévu, dans la partie intérieure de carter (2) au-dessus de l'ouverture (19), une autre ouverture (supérieure) (20) susceptible d'être obturée et, radialement alignée à celle-ci, un évidement (25) dans la partie extérieure de carter (1).

6. Turbomachine selon l'une des revendications précédentes, **caractérisée en ce que** les ouvertures (19, 20) et/ou les évidements (24, 25) sont configurés pour pouvoir être obturés chacun par un corps obturateur (21, 22, 26, 27), le corps obturateur (21, 22, 26, 27) étant intégré, au moins vers le trajet de flux (3), de préférence à fleur avec le carter (1, 2).

7. Turbomachine selon la revendication 6, **caractérisée en ce qu'**un capteur d'eau est intégré dans un corps obturateur pour une ouverture de la partie intérieure de carter.

8. Turbomachine selon la revendication 6 ou 7, **caractérisée en ce que** les évidements (24, 25) et/ou les ouvertures (19, 20) sont pourvus d'un taraudage dans lequel un filetage extérieur du corps obturateur associé (21, 22, 26, 27) s'engage.

9. Procédé pour contrôler le niveau de liquide du dépôt préalable liquide d'un joint d'étanchéité d'une turbomachine, notamment d'une pompe axiale fonctionnant en position verticale, selon l'une des revendications précédentes, **caractérisé en ce que**, après enlèvement d'un ou de plusieurs corps obturateur (21, 22, 26, 27) éventuellement présents, un tronçon de conduit (28) d'un dispositif de contrôle de niveau de liquide est introduit de l'extérieur par l'évidement (24) dans la partie extérieure de carter (1) et est fixé dans l'ouverture (19) en alignement correspondant dans la partie intérieure de carter (2), **en ce que** la valve (23) du côté pompe dans ou à l'ouverture (19) et une ou plusieurs valves (30, 35) du dispositif de contrôle de niveau de liquide sont asservies en ouverture, ce après quoi le niveau de liquide à l'intérieur de la partie intérieure de carter (2) est déterminé à l'aide du dispositif, ce après quoi les valves (30, 35) sont asservies en fermeture et le dispositif est enlevé, ce après quoi les corps obturateur (21, 22, 26, 27) préalablement enlevés sont réinsérés.

10. Procédé pour évacuer le dépôt préalable liquide d'un joint d'étanchéité d'une turbomachine, notamment d'une pompe axiale fonctionnant en position verticale, selon l'une des revendications précédentes, **caractérisé en ce que**, après enlèvement d'un ou de plusieurs corps obturateur (21, 22, 26, 27) éventuellement présents, un tronçon de conduit (28) est introduit de l'extérieur par l'évidement (24) dans la partie extérieure de carter (1) et est fixé dans l'ouverture (19) en alignement correspondant dans la partie intérieure de carter (2), la valve (23) du côté pompe étant asservie en ouverture et le liquide étant évacué du carter de pompe (2) par le tronçon de conduit (28), ce après quoi les étapes précitées étant mises en oeuvre dans l'ordre inverse.

11. Procédé selon la revendication 10, **caractérisé en ce que**, pour l'évacuation de liquide, de manière préférable, un corps obturateur (27) est d'abord enlevé de l'évidement supérieur (25) dans la partie extérieure de carter (1), ce après quoi le corps obturateur (22) obturant l'ouverture supérieure (20) de la partie intérieure de carter (2) est enlevé et les corps obturateurs (22, 27) sont remis en place après l'évacuation de liquide.

12. Procédé d'apport du dépôt préalable liquide d'un joint d'étanchéité d'une turbomachine, notamment d'une pompe axiale fonctionnant en position verticale, selon l'une des revendications précédentes, **caractérisé en ce que**, dans la mesure où il est présent, un corps obturateur (27) est d'abord enlevé de l'évidement supérieur (25) dans la partie extérieure de carter (1), ce après quoi le corps obturateur (22) est enlevé de l'ouverture supérieure (20) de la partie intérieure de carter (2) et un tronçon de conduit (28) est introduit de l'extérieur par l'évidement supérieur (25) dans la partie extérieure de carter (1) et est fixé dans l'ouverture (20) en alignement correspondant dans la partie intérieure de carter (2), ce après quoi le remplissage avec du liquide est effectué par le tronçon de conduit (28), et **en ce que**, après le remplissage avec du liquide, le tronçon de conduit (28) est enlevé et les corps obturateurs (22, 27) sont remis en place dans l'ordre inversé.
